# EUROPÄISCHE PATENTSCHRIFT

(11) **EP 1 945 960 B1**
(45) Veröffentlichungstag und Bekanntmachung des Hinweises auf die Patenterteilung: **17.06.2009**
(21) Anmeldenummer: 06806674.5
(22) Anmeldetag: 03.11.2006
(51) Int. Cl.: F16D 31/00

(54) **SCHALTKUPPLUNG**
CLUTCH
EMBRAYAGE

(30) Priorität: 04.11.2005 DE 102005053154
(43) Veröffentlichungstag der Anmeldung: 23.07.2008
(73) Patentinhaber: RISTL, Helmut, 71701 Schwieberdingen (DE)
(72) Erfinder: RISTL, Helmut, 71701 Schwieberdingen (DE)
(74) Vertreter: Stute, Ivo Peter
(86) Internationale Anmeldenummer: PCT/EP2006/010567
(87) Internationale Veröffentlichungsnummer: WO 2007/051636

(56) Entgegenhaltungen:
- EP-A1- 0 398 124
- DE-A1- 2 533 852
- US-A- 1 360 807
- US-A- 3 165 182
- US-A- 4 518 069
- US-A- 4 932 510

## Beschreibung

### 1 Stand der Technik

Die Erfindung betrifft eine Schalt-Kupplung zum Verbinden eines antriebsseitigen und eines abtriebsseitigen Bauteils mit zumindest einem ersten und einem zweiten Kupplungsteil.

Dokument US-A-4518069 offenbart eine solche Schalt-Kupplung. Bei Schalt-Kupplungen unterscheidet man grundsätzlich zwischen formschlüssigen und kraftschlüssigen Schalt-Kupplungen.

Bei formschlüssigen Schalt-Kupplungen werden zwei Wellen über beispielsweise Bolzen, Klauen oder Zähne miteinander gekoppelt. Diese Kupplungen weisen den Nachteil auf, dass sie nur im Stillstand, bei Drehzahlgleichheit oder bei geringen Relativdrehzahlen beider Wellen schaltbar sind. Sie können nur in diskreten Stellungen der zu verbindenden Wellen zueinander arbeiten.

Kraftschlüssige Kupplungen sind vor allem Reibungskupplungen. Hier wird der Kraftfluss durch Aneinanderpressen von Reibflächen, die je mit einer Welle drehfest, aber verschiebbar verbunden sind, hergestellt.

Diese Kupplungen sind während des Betriebs schaltbar. Bei der in der Kraftfahrzeugtechnik am häufigsten verwendeten Einscheibentrocken-Kupplung erfolgen Kraftschluss und Drehmomentübertragung bzw. Drehzahlanpassung in der Weise, dass eine axial verschiebbare, mit der Getriebewelle drehfest verbundene Kupplungsscheibe durch Federkraft mehr oder weniger stark gegen das Schwungrad des Motors gepresst und von diesem mit oder ohne entsprechenden Schlupf durch Reibung mitgenommen wird. Zur Lösung der Kupplung wird die Kupplungsscheibe vom Schwungrad getrennt. Wenn sehr hohe Drehmomente zu übertragen sind oder die Kupplung nur kleine Dimensionen annehmen kann, werden Zweischeiben- und Mehrscheiben-Kupplungen (Lamellen-Kupplungen) verwendet. Ein wesentlicher Nachteil von Reibungs-Kupplungen besteht darin, dass sie einem vergleichsweise hohen Verschleiß durch Abrieb an den Reibflächen sowie durch die durch die Reibung bedingte thermische Belastung unterliegen. Darüber hinaus arbeiten Reibungs-Kupplungen nicht frei von Leistungsvertusten.

Die Kupplungen können durch äußeren Eingriff mechanisch, elektrisch, hydraulisch oder pneumatisch fremdgeschaltet sein. Es sind aber auch selbsttätig schaltende Kupplungen, wie Fliehkraft-Kupplungen oder Rutsch-Kupplungen, bekannt, die erst nach Erreichen einer bestimmten Drehzahl oder eines bestimmten Drehmoments schalten.

### 2 Erfindungsgemäße Lösung

Die **Aufgabe** der vorliegenden Erfindung besteht darin, eine neuartige Kupplung zu schaffen, die während des Betriebs schaltbar ist, im wesentlichen ohne Leistungsverluste arbeitet sowie verschleißfrei und damit wartungsfrei ist.

Diese Aufgabe wird bei einer Schalt-Kupplung der eingangs genannten Art mit den Merkmalen des Hauptanspruchs gelöst. Die Unteransprüche enthalten vorteilhafte Ausgestaltungen.

Der Grundgedanke der vorliegenden Erfindung besteht darin, dass durch mindestens einen Schieber, der bei sich relativ zueinander bewegenden Kupplungsteilen zum Schalten der Kupplung in eine Fluidkammer eingreift, in der Fluidkammer ein Druck auf das Fluid ausgeübt wird, so dass das erste Kupplungsteil aufgrund des auf die Wandung der Fluidkammer ausgeübten Drucks mitgenommen wird.

Um den Druck innerhalb der Fluidkammer in Richtung der Bewegung des zweiten Kupplungsteils relativ zum ersten Kupplungsteil aufbauen zu können, ist der Schieber vorzugsweise so ausgebildet, daß er die Fluidkammer quer zur Richtung der Relativbewegung zumindest teilweise unterteilen kann. Je weiter der Schieber während eines Schaltvorgangs in die Fluidkammer eingreift, desto weniger Fluid kann innerhalb der Fluidkammer an dem Schieber vorbei strömen, so dass der Schlupf zwischen den beiden Kupplungsteilen um so geringer wird, je weiter der Schieber in die Fluidkammer hineinragt, bis der Schlupf zu Null wird, wenn die Fluidkammer durch den Schieber vollständig geteilt ist. Dabei kann über die Vortriebsgeschwindigkeit des Schiebers in die Fluidkammer innerhalb bestimmter Grenzen bestimmt werden, ob die Kupplung "hart" oder "weich" schaltet.

Um eine möglichst schlupffreie Kraftübertragung vom zweiten Kupplungsteil auf das erste Kupplungsteil zu gewährleisten, ist es sinnvoll, wenn die Wandung des zweiten Kupplungsteils den Hohlraum bzw. die Fluidkammer möglichst dicht verschließt, damit ein Austreten des Fluids aus der Fluidkammer während des Eingriffs des Schiebers in die Fluidkammer vermieden wird. Sofern ein gewisser Schlupf zwischen dem zweiten Kupplungsteil und dem ersten Kupplungsteil in Kauf genommen werden kann, ist ein dichtes Verschließen der Fluidkammer durch die Wandung nicht zwingend notwendig.

Nachdem die Kraftübertragung vom zweiten Kupplungsteil auf das erste Kupplungsteil über ein Fluid erfolgt, bietet die erfindungsgemäße Kupplung sowohl die Vorteile einer formschlüssigen als auch die einer kraftschlüssigen Kupplung, ohne aber die Nachteile solcher vorbekannten Kupplungen aufzuweisen. So arbeitet die erfindungsgemäße Kupplung im wesentlichen reibungs- und damit verschleiß- sowie wartungsfrei. Auch ist eine im wesentlichen schlupffreie Kraftübertragung möglich, und sie kann auch bei einer hohen Relativgeschwindigkeit zwischen dem ersten und dem zweiten Kupplungsteil geschaltet werden. Das Schalten ist im wesentlichen frei von Leistungsverlusten, wodurch eine thermische Belastung der Kupplung während des Schaltens wirkungsvoll vermieden wird.

In einer bevorzugten Ausführungsform der erfindungsgemäßen Kupplung ist die der Wandung des zweiten Kupplungsteils gegenüberliegende Seite des Hohlraums in Richtung der Relativbewegung wellig bzw. hyperbolisch/evolventenförmig ausgebildet, so dass im Hohlraum mindestens zwei Fluidkammern entstehen. Durch die Verwendung einer Mehrzahl von Fluidkammern ist es möglich, zur besseren Lastverteilung mehrere Schieber zur Kraftübertragung vom zweiten Kupplungsteil auf das erste Kupplungsteil zu verwenden. Ein weiterer Vorteil besteht darin, dass sich ein Schieber bei bestehendem Schlupf zwischen dem zweiten Kupplungsteil und dem ersten Kupplungsteil von einer ersten in eine nachfolgende, benachbarte Fluidkammer bewegen kann, ohne dass er an einer Kante im Bereich des Übergangs von einer Fluidkammer zu einer benachbarten Fluidkammer "hängen" bleibt.

Grundsätzlich ist die erfindungsgemäße Kupplung für eine Vielzahl von Anwendungen einsetzbar, so beispielsweise zur Übertragung von Kräften zwischen parallel laufenden Endlosbändern. Die Erfindung eignet sich aber insbesondere für die Kraftübertragung zwischen Kupplungsteilen, die beide drehbar gelagert sind.

So weist eine bevorzugte Ausführungsform der erfindungsgemäßen Kupplung ein Kupplungs-Innenteil und ein Kupplungs-Außenteil auf, die zwei konzentrisch um eine Drehachse gelagerte Bauteile miteinander verbinden. Die Bauteile können beispielsweise eine Welle und ein darauf sitzendes Rad, beispielsweise ein Zahnrad eines Getriebes, sein. Hierdurch besteht beispielsweise die Möglichkeit, ein Schaltgetriebe sehr kompakt auszubilden, da üblicherweise zum schaltbaren Festsetzen eines Zahnrads auf einer Welle axial wirkende Schiebemechaniken für formschlüssige Kupplungen oder Lamellenkupplungen verwendet werden, die wesentlich mehr Raum benötigen als die erfindungsgemäße Kupplung.

Das Kupplungs-Innenteil kann dann beispielsweise scheibenförmig mit einer zur Drehachse der Scheibe konzentrischen Außenfläche als Wandung ausgebildet sein, die eine oder mehrere Fluidkammern verschließt, die in einem durch das Kupplungs-Außenteil gebildeten inneren Hohlmantel vorgesehen sind.

Die erfindungsgemäße Kupplung ist gleichermaßen zur Verbindung zweier miteinander fluchtender Wellen geeignet. Hierfür kann das erste Kupplungsteil an einem Ende einer der beiden Wellen mit einem Hohlraum ausgebildet sein, der in Richtung zur anderen Welle hin offen ist und durch eine an dem anderen Ende der beiden Wellen ausgebildete, sich quer zu deren Drehachse erstreckende Wandung verschlossen ist.

In Abhängigkeit von der Art des verwendeten Fluids oder der Füllmenge des Fluids in der Fluidkammer, insbesondere dann, wenn die Fluidkammer vollständig mit dem Fluid befüllt ist, kann es notwendig sein, dass das durch den in die Fluidkammer eintretenden Schieber verdrängte Fluid, abgeführt werden muss, um das Eintreten des Schiebers in die Fluidkammer überhaupt erst zu ermöglichen. Hierzu kann im Schieber mindestens ein Fluidkanal ausgebildet sein, der bei Verschieben des Schiebers in die Fluidkammer den Durchtritt von verdrängtem Fluid in eine in Bewegungsrichtung des Schiebers hinter dem Schieber im zweiten Kupplungsteil frei werdende Ausgleichskammer ermöglicht.

Alternativ oder in Ergänzung hierzu kann die Fluidkammer über entsprechende Kanäle im zweiten Kupplungsteil mit einer Fluidversorgungseinheit verbunden sein, mit dem ein statischer Druck innerhalb der Fluidkammer, der dem durch den Schieber erzeugten Druck überlagert ist, regelbar ist, wobei bei Eintritt des Schiebers in die Fluidkammer verdrängtes Fluid von der Fluidversorgungseinheit aufgenommen und bei einer Bewegung des Schiebers aus der Fluidkammer heraus Fluid von der Fluidversorgungseinheit in die Fluidkammer nachgeführt werden kann.

Über die Gestaltung der der Fluidkammer zugewandten Stirnkante des Schiebers, insbesondere die Gestaltung der Kontur des Schiebers in Richtung der Relativbewegung, kann die Ansprechcharakteristik der Kupplung beeinflusst werden. Die Kontur könnte beispielsweise rechteckig, dreieckig, schräg, konkav oder konvex sein. Je nach Kontur des Schiebers bildet sich während der noch bestehenden Relativbewegung zwischen dem ersten und dem zweiten Kupplungsteil eine andere Strömung des Fluids am Schieber aus, mit der gewollten Folge unterschiedlicher Kupplungscharakteristiken.

Der Schieber kann bevorzugt mit einem Kolben fest verbunden sein, der im zweiten Kupplungsteil gelagert ist. Ein solcher Kolben kann in einer hierfür vorgesehenen Führung im zweiten Kupplungsteil beispielsweise hydraulisch, elektromagnetisch oder pneumatisch betätigt werden.

Auch kann der Schieber entgegen einer Federkraft bewegt werden, wodurch bei ausreichender Masse des Schiebers auch eine Ausbildung der erfindungsgemäßen Kupplung als Fliehkraft-Kupplung möglich ist.

Insbesondere bei der Ausgestaltung der erfindungsgemäßen Kupplung mit drehbar gelagerten Kupplungsteilen kann es sinnvoll sein, wenn die Anzahl der Schieber größer als die Anzahl der Fluidkammern ist, insbesondere dann, wenn die Fluidkammern und die Schieber in Umfangsrichtung der jeweiligen Kupplungsteile jeweils gleichmäßig verteilt sind. Es kann auf diese Weise sichergestellt werden, dass unabhängig von der Relativposition der Kupplungsteile immer mindestens ein Schieber in eine der Fluidkammern hinein ragt.

Als Fluide kommen insbesondere inkompressible Flüssigkeiten, viskoelastische Fluide, die bis zu einem bestimmten Grad reversibel komprimierbar sind, sowie Gele in Betracht.

Insbesondere bei Verwendung der erfindungsgemäßen Kupplung als Anfahr-Kupplung kann es sinnvoll sein, mechanische Mittel vorzusehen, um die Kupplungsteile formschlüssig miteinander zu verbinden, sobald sich nach dem Schalten der Kupplung die Relativbewegung zwischen dem zweiten und dem ersten Kupplungsteil auf ein Minimum reduziert hat bzw. kein Schlupf mehr besteht.

Im Folgenden wird die Erfindung anhand der beigefügten Zeichnungen, in denen mehrere bevorzugte Ausführungsbeispiele der erfindungsgemäßen Kupplung und Teile hiervon dargestellt sind, näher erläutert. Es zeigen:
- Fig.1: eine erste Ausführungsform der Kupplung, quer zu ihrer Drehachse geschnitten, in nicht geschaltetem Zustand;
- Fig. 2: die erste Ausführungsform, entlang der Drehachse geschnitten, in nicht geschaltetem Zustand;
- Fig. 3: die erste Ausführungsform, quer zur Drehachse geschnitten in geschaltetem Zustand;
- Fig. 4: die erste Ausführungsform, entlang der Drehachse geschnitten, in geschaltetem Zustand;
- Fig. 5: eine zweite Ausführungsform, entlang ihrer Drehachse geschnitten, in ungeschaltetem Zustand;
- Fig. 6: eine dritte Ausführungsform, entlang ihrer Drehachse geschnitten, in geschaltetem Zustand;
- Fig. 7: eine vierte Ausführungsform, entlang ihrer Drehachse geschnitten, in nicht geschaltetem Zustand;
- Fig. 8a bis 8d: verschiedener Fluidkammerformen, quer zur Drehachse der Kupplung geschnitten;
- Fig. 9a, 9b: schematische Darstellungen verschiedener Anordnungen von Fluidkammern und Schiebervorrichtungen zueinander; und
- Fig. 10a bis 10g: Querschnitte verschiedener Ausführungsformen eines Schiebers.

Im Folgenden werden für gleichwirkende Bauteile gleiche Bezugsziffern verwendet.

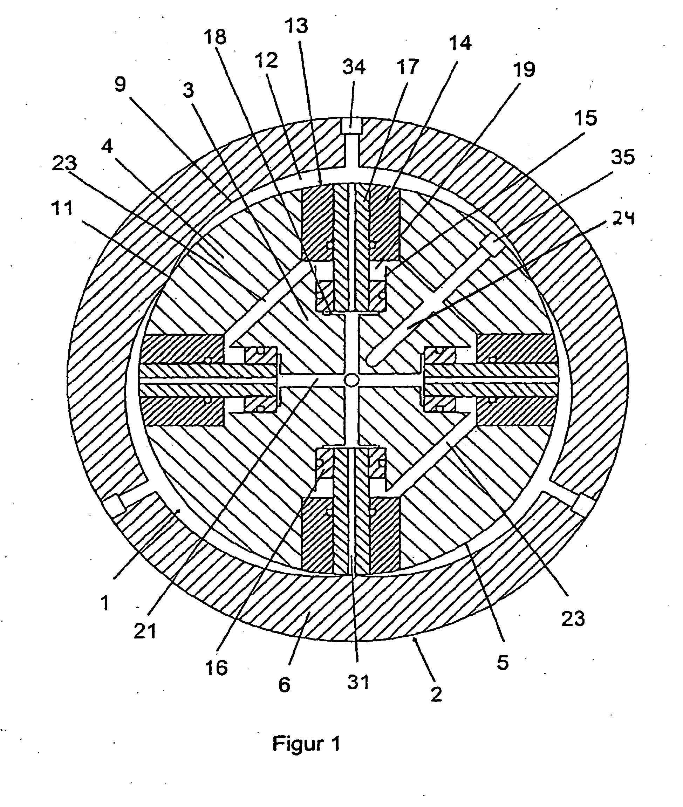

Die in den Fig. 1 bis 4 dargestellte Ausführungsform der erfindungsgemäßen Kupplung besitzt ein Kupplungs-Innenteil 1 und ein dieses umgebendes Kupplungs-Außenteil 2. Das Kupplungs-Innenteil 1 weist einen an einer Welle 3 ausgebildeten Scheibenring 4 auf, dessen Mantelfläche 5 konzentrisch zur Längsachse der Welle 3 verläuft.

Das Kupplungs-Innenteil 1 wird vollständig von dem Kupplungs-Außenteil 2 umschlossen. Zum Kupplungs-Außenteil 2 gehört ein den Scheibenring 4 des Kupplungs-Innenteils 1 vollständig umfassender, hohlzylindrischer Mantelkörper 6, der von in Längsrichtung der Welle vor und hinter dem Kupplungs-Innenteil 1 drehbar gelagerten Wandscheiben 7, 8 gehalten wird. Die Wandscheibe 7 ist einstückig mit dem Mantelkörper 6 verbunden, während die Wandscheibe 8 mit dem Mantelkörper 6 verschraubt ist. Die Breite des Mantelkörpers 6 entspricht der Breite des Scheibenrings 4.

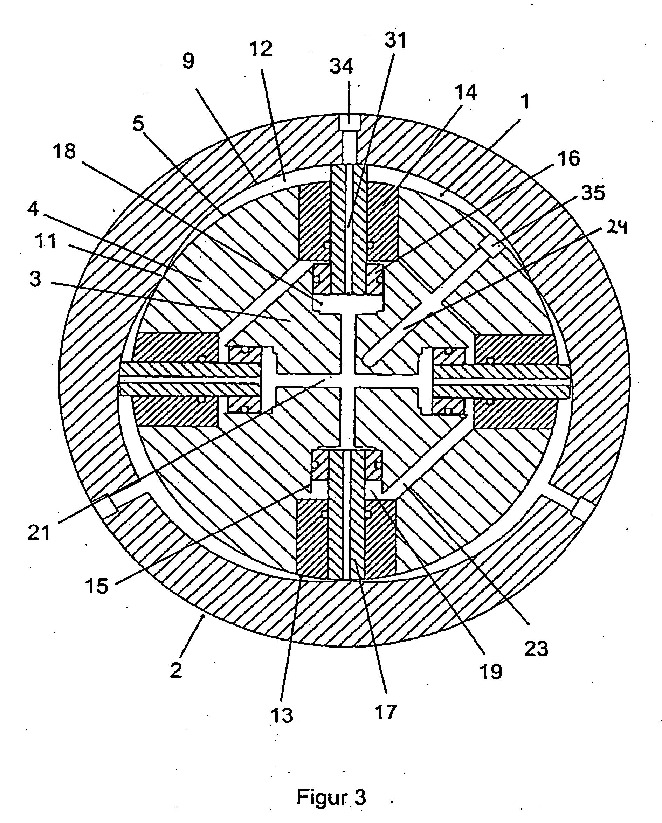

Wie insbesondere in den Fig. 1 und 3 zu sehen ist, verläuft die innere Mantelfläche 9 des Mantelkörpers 6 nicht parallel zur äußeren Mantelfläche 5 der Ringscheibe 4, sondern ist wellig bzw. hyperbolisch-evolventenartig ausgebildet, wobei der Innenradius der inneren Mantelfläche 9 an zu jeweils 120° versetzten Teilkreisabschnitten ein Minimum erreicht. An diesen Stellen 11 entspricht der Radius der inneren Mantelfläche 9 dem Radius der äußeren Mantelfläche 5. Hierdurch werden zwischen dem Kupplungs-Innenteil 1 und dem Kupplungs-Außenteil 2 drei Fluidkammern 12 gebildet. Die Bereiche, in denen der Radius der inneren Mantelfläche 9 dem Radius der äußeren Mantelfläche 5 entspricht, können auch breiter als dargestellt ausgeführt sein. Dadurch wird die Verdrängung des Fluids aus einer Fluidkammer- in eine benachbarte Fluidkammer erschwert.

Im Scheibenring 4 des Kupplungs-Innenteils 1 sind sich radial von der äußeren Mantelfläche nach innen erstreckende Ausnehmungen 13 für jeweils eine Schieberführung 14 und eine radial weiter innen liegende, mit der Schieberführung 14 fluchtende Kolbenführung 15 vorgesehen. Die Ausnehmungen 13 sind in Umfangsrichtung um 90° zueinander versetzt angeordnet. Die Schieberführung 14 ist in die Aufnahme 13 von außen eingepresst.

In jeder Kolbenführung 15 sitzt ein Kolben 16, in den jeweils ein radial sich nach außen erstreckender Schieber 17 eingesetzt (eingeschraubt) ist. Die Kolben 16 und die Schieber 17 sind in den Kolbenführungen 15 bzw. den Schieberführungen 14 radial beweglich. Die Bewegung der Kolben 16 ist radial nach innen durch einen Anschlag begrenzt, der vor den radial innenliegenden Druckkammern 18 vorgesehen ist. Radial nach außen wird die Bewegung der Kolben 16 durch die äußere Mantelfläche 9 begrenzt:
An den radial innenliegenden und an den radial außen liegenden Stirnseiten der Kolben sind Druckkammern 18, 19 vorgesehen. Die innen liegenden Druckkammern 18 sind über radial verlaufende und sich im Bereich der Drehachse der Welle 3 treffende Druckleitungen 21 verbunden, die über eine entlang der Drehachse der Welle verlaufende Versorgungsleitung 22 mit einem Fluid druckbeaufschlagt werden können. Die äußeren Druckkammern 19 sind über Druckleitungen 23, die sich zwischen benachbarten Druckkammern 19 erstrecken, untereinander verbunden. Eine der Druckleitungen 23 ist über eine radial nach innen verlaufende Leitung 24 mit einer in der Welle 3 parallel zur Versorgungsleitung 22 verlaufenden Versorgungsleitung 25 verbunden, so dass auch die radial außen liegenden Druckkammern 19 mit einem Fluid unter Druck beaufschlagt werden können.

Die Versorgungsleitungen 22, 25 werden durch jeweils eine radial nach außen gerichtete Fluidleitung versorgt, wobei die Welle 3 am Austritt der Versorgungsleitungen von jeweils einer flüssigkeitsdicht um die Welle 3 herum verlaufenden, nicht dargestellten Ringkammer umgeben ist, die jeweils mit einer ebenfalls nicht dargestellten Fluidversorgungseinheit in Verbindung steht.

Die radial innen liegenden Druckkammern 18 sind gegenüber den radial außen liegenden Druckkammern 19 über Kolbendichtringe 26 abgedichtet, so dass, wenn die radial innenliegenden Druckkammern 18 über ein Fluid mit einem Druck beaufschlagt werden, die Kolben 16 samt Schieber 17 radial nach außen bewegt werden, während sie wieder zurück nach innen bewegt werden, wenn die Druckkammern 19 unter Druck gesetzt werden.

Innerhalb der Schieberführungen 14 sind ebenfalls Dichtringe 27 zur Abdichtung der radialen äußeren Druckkammern 19 gegenüber den Fluidkammern 12 vorgesehen.

Wird ein Schieber 17 in eine Fluidkammer 12 hineingedrückt, so wird das in der Fluidkammer befindliche Fluid verdrängt. Damit es die Bewegung des Schiebers zulässt, muss es aus der Fluidkammer abgeführt werden. Hierzu sind in den Schiebern 17 Fluidkanäle 31 vorgesehen, die sich innerhalb der Schieber 17 radial erstrecken und die jeweilige Fluidkammer 12 mit den radial inneren Druckkammern 18 verbinden.

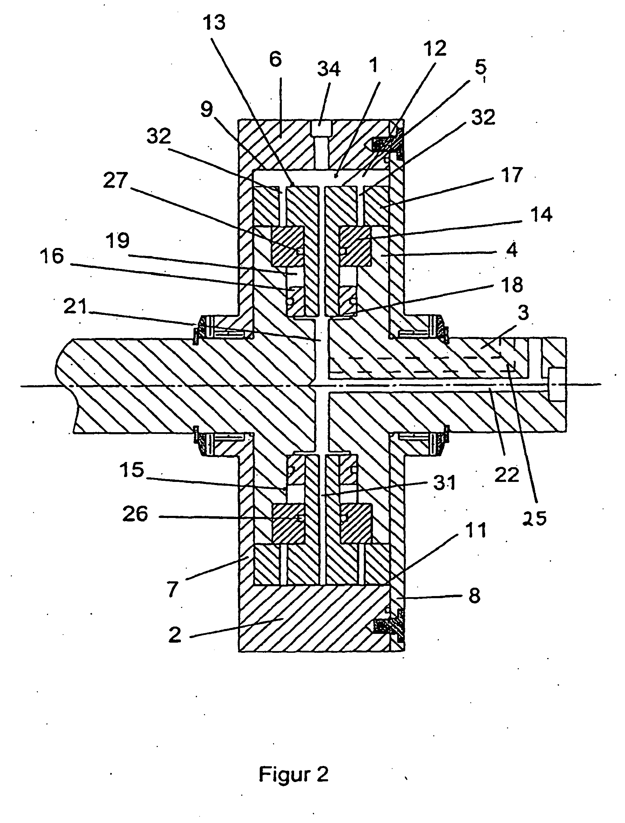

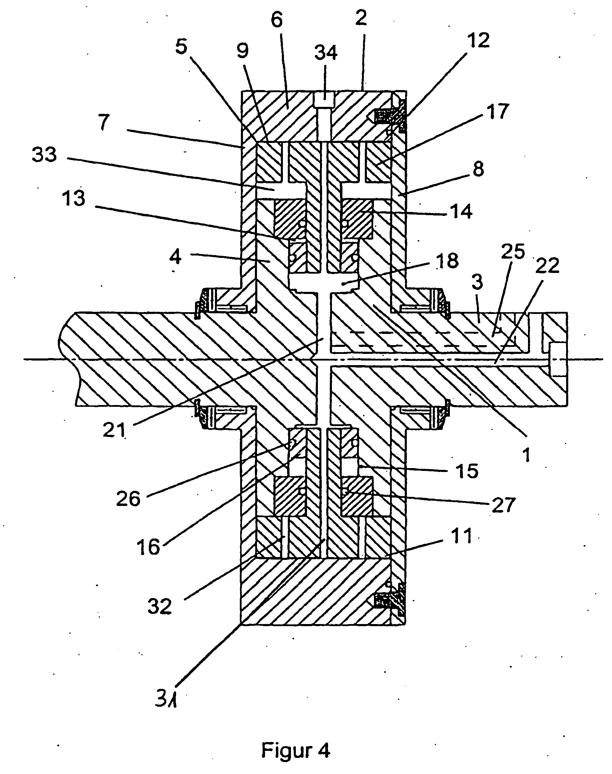

Wie sich insbesondere den Fig. 2 und 4 entnehmen lässt, erstrecken sich die Schieber 17 über die gesamte Breite der Fluidkammern 12, so dass sie die Fluidkammern quer zur Drehrichtung des Kupplungs-Innenteils 1 im Kupplungs-Außenteil 2 teilweise bzw. ganz unterteilen können. In jedem Schieber 17 sind in axialer Richtung rechts und links neben dem Fluidkanal 31 weitere Fluidkanäle 32 vorgesehen, durch die durch den Schieber 17 verdrängtes Fluid aus der Fluidkammer 12 in eine Ausgleichskammer 33 strömen kann, die freigegeben wird, wenn der Schieber 17 radial nach außen bewegt wird.

Die Fluidkammern 12 können über radial durch den Mantelkörper 6 hindurchgeführte Entlüftungsleitungen 34 entlüftet bzw. geleert werden. Die Entlüftung der Fluidkammern 19 wird durch die Entlüftungsbohrung 34 über ein Ventil 35 durchgeführt.

In den Figuren 1 bis 4 ist das Grundprinzip eines Ausführungsbeispiels einer erfindungsgemäßen Schalt-Kupplung dargestellt, wobei die Figuren 1 und 2 die Kupplung in nicht geschaltetem Zustand zeigen, in der die äußeren Stirnkanten der Schieber 17 bündig mit der äußeren Mantelfläche 5 des Kupplungs-Innenteils 1 abschließen und nicht in die Fluidkammern 12 eingreifen, und die Figuren 3 und 4 die Kupplung in geschaltetem Zustand zeigen, in dem die äußeren Stirnkanten der Schieber 17 an der inneren Mantelfläche 5 des Kupplungs-Außenteils 2 anliegen und die Fluidkammern 12 unterteilen.

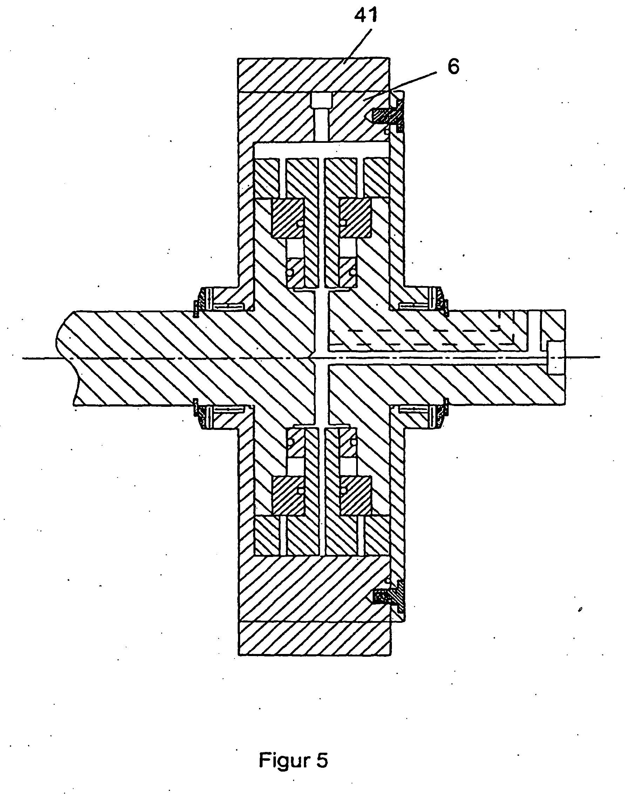

In Figur 5 ist die in den Figuren 1 bis 4 dargestellte Kupplung mit einem auf dem Mantelkörper 6 aufsitzenden Zahnkranz 41 dargestellt. In diesem Fall bildet das Kupplungsaußenteil den Körper eines Zahnrades, beispielsweise eines Getriebezahnrades, das auf einer Welle drehbar gelagert und mit dieser fest gekoppelt werden kann.

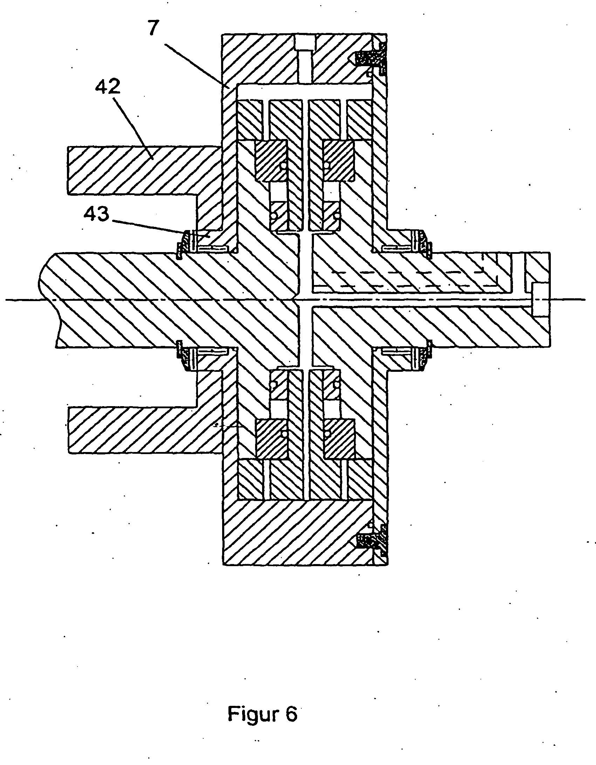

Das in Figur 6 dargestellte Ausführungsbeispiel unterscheidet sich von dem in Figur 5 dargestellten Ausführungsbeispiel dadurch, dass ein Zahnkranz 42 nicht auf dem Mantelkörper 6, sondern auf einem konzentrisch zur Welle verlaufenden, an der Wandscheibe 7 ausgebildeten Ringflansch 43 aufsitzt, der gleichzeitig als Lagergehäuse für die Lagerung der Wandscheibe 7 dient.

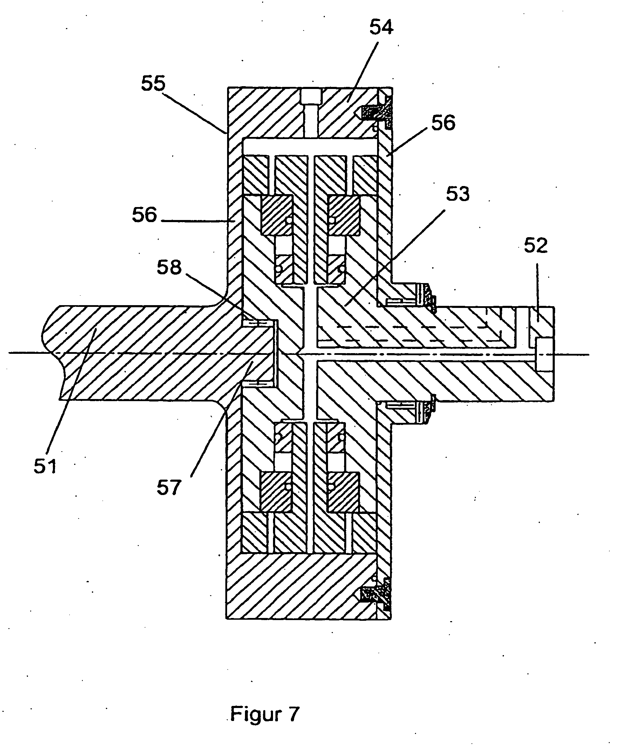

Figur 7 zeigt eine weitere bevorzugte Ausführungsform mit zwei über die Schalt-Kupplung verbundenen Wellen 51, 52. Das Kupplungs-Innenteil 53 ist identisch zum in den Figuren 1 bis 4 dargestellten Kupplungs-Innenteil 1. Der Mantelkörper 54 des Kupplungs-Außenteils wird auf seiner der Welle 51 zugewandten Seite über eine Wandscheibe 56 gehalten, die am Ende der Welle 51 ausgebildet ist. Auf seiner der Welle 51 abgewandten Seite ist der Mantelkörper 54 über eine mit ihm verschraubte Wandscheibe 56 gehalten, die auf der Welle 52 drehbar gelagert ist. Am Ende der Welle 51 ist ein zylindrischer Lagersitz 57 für ein in einer entsprechenden Ausnehmung im Ende der Welle 52 sitzendes Lager 58 ausgebildet.

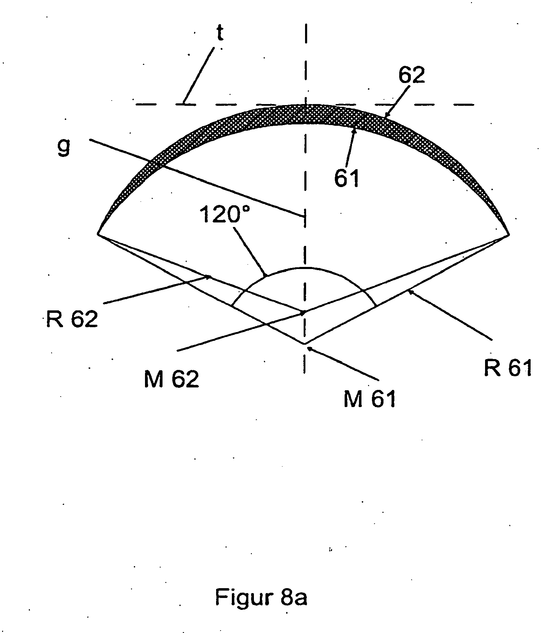

In den Figuren 8a bis 8d sind unterschiedliche Fluidkammerformen dargestellt. Die in Figur 8a schraffiert dargestellte Fluidkammerform ergibt sich aus zwei Teilkreisabschnitten 61, 62 mit unterschiedlichen Krümmungsradien, wobei der Krümmungsradius des inneren Teilkreisabschnitts 61 durch den Radius r₆₁ der äußeren Mantelfläche des Kupplungs-Innenteils gegeben ist und einen Abschnitt von 120° einschließt. Der äußere Krümmungsradius r₆₂ ist kleiner als der innere Krümmungsradius r₆₁, wobei die Kreismittelpunkte M₆₁, M₆₂ der Teilkreisabschnitte 61, 62 auf einer Geraden g liegen, die senkrecht zu einer Tangente t verläuft, die am Halbierungspunkt einer der beiden Teilkreisabschnitte 61, 62 anliegt, also im Bereich der größten lichten Höhe der Fluidkammer.

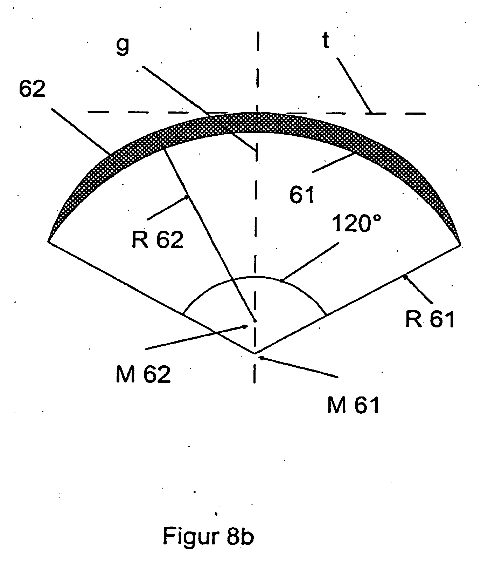

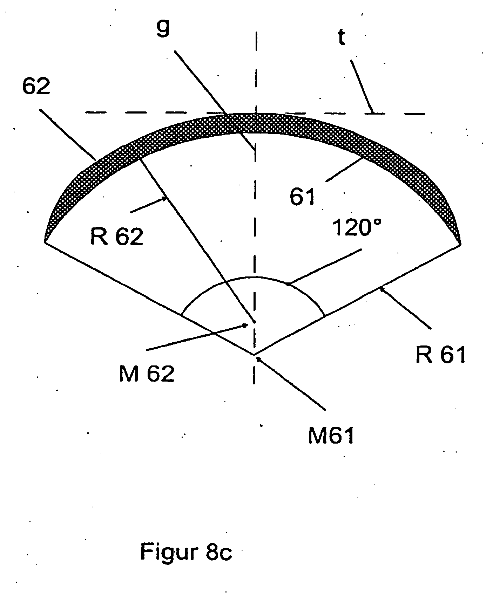

Die in den Figuren 8b und 8c dargestellten Fluidkammerformen unterscheiden sich von der in Figur 8a dadurch, dass der Kreismittelpunkt M₆₂ für den äußeren Teilkreisabschnitt 62 auf der Gerade g jeweils weiter nach außen verschoben ist, wobei der Teilkreisabschnitte 62 in den Randbereichen steiler auf den inneren Teilkreisabschnitt 61 zuläuft. Der Randbereich in Figur 8b ist etwas länger und läuft dafür in einem etwas flacheren Winkel auf den inneren Teilkreisabschnitt 61 zu als in Figur 8c.

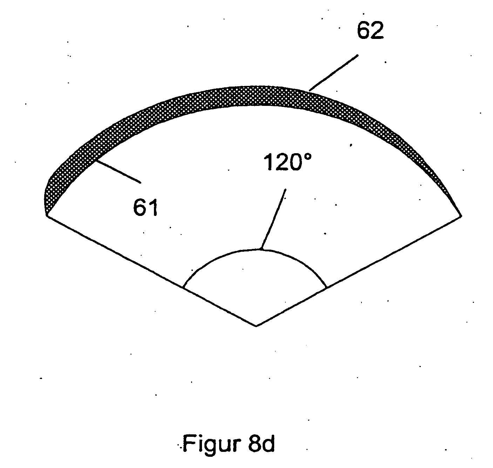

Die in Figur 8d dargestellte Fluidkammerform unterscheidet sich von den vorherigen Fluidkammerformen dadurch, dass sich der Abstand der Teilkreisabschnitte 61, 62 von einer Seite ausgehend ständig vergrößert und erst in einem kurzen Randbereich, in der Darstellung links, wieder aufeinander zuläuft.

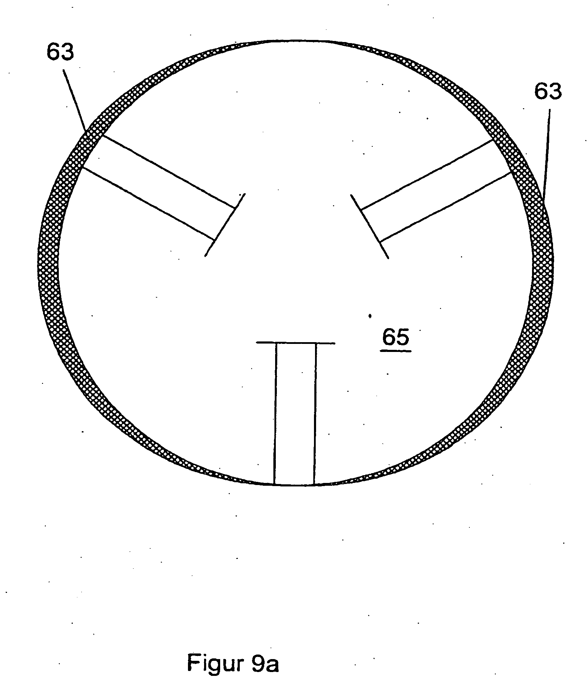

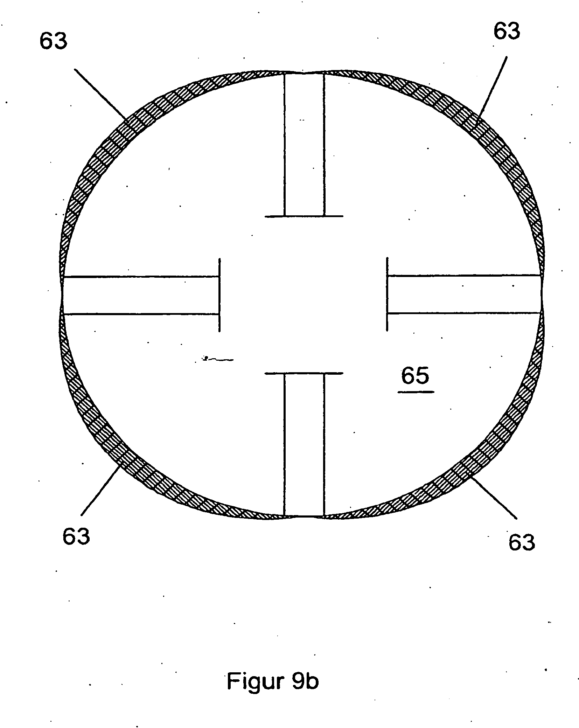

In den Figuren 9a und 9b sind zwei verschiedene Anordnungen von Fluidkammern 63 für die erfindungsgemäße Schalt-Kupplung dargestellt, einmal mit zwei Fluidkammern, die sich über jeweils einen Teilkreisabschnitt von 180° erstrecken (Figur 9a), und einmal mit vier Fluidkammern, die sich über Teilkreisabschnitte von jeweils 90° erstrecken (Figur 9b). In den dargestellten Kupplungs-Innenteilen 65 sind jeweils drei Schieberführungen 64 vorgesehen, die um jeweils 120° zueinander versetzt angeordnet sind.

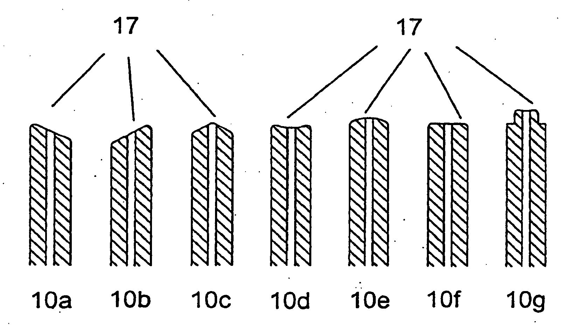

In den Figuren 10a bis 10g sind Schieber 17 im Querschnitt mit verschieden ausgeformten, fluidkammerseitigen Stirnkanten dargestellt. Das dargestellte Profil entspricht dem Querschnittsprofil in Richtung quer zur Drehachse, wenn die Schieber in das Kupplungs-Innenteil eingesetzt sind. Die in den Figuren 10a und 10b dargestellten Schieber weisen abgeschrägte Stirnkanten auf. Das in Figur 10c dargestellte Stirnkantenprofil ist auf beiden Seiten abgeschrägt und läuft zur Mitte radial nach außen spitz zu. Das in Figur 10d dargestellte Stirnkantenprofil verläuft konkav, das in Figur 10e dargestellte Stirnkantenprofil konvex. Das Stirnkantenprofil in Figur 10f ist im wesentlichen eben mit abgerundeten Seitenkanten, während das in Figur 10g dargestellte Stirnkantenprofil in den Seitenbereichen eben ist und einen mittigen, radial nach außen gerichteten Vorsprung aufweist, dessen Stirnseite leicht konkav ausgebildet ist. Mit den verschiedenen Stirnkantenprofilen kann das Ansprechverhalten der Kupplung, insbesondere hinsichtlich eines "weichen" oder "harten" Schaltens beeinflusst werden.

## Patentansprüche

1. Schalt-Kupplung zum Verbinden eines antriebsseitigen und eines abtriebsseitigen Bauteils mit zumindest einem ersten und einem zweiten Kupplungsteil, mindestens einem nach mindestens einer Seite offenen, mindestens eine Fluidkammer (12, 63) bildenden Hohlraum im ersten Kupplungsteil (2, 55), der durch eine Wandung am zweiten Kupplungsteil (1, 53) verschlossen ist, wobei Hohlraum und Wandung relativ zueinander beweglich sind, mindestens einem am zweiten Kupplungsteil (1, 53) im Bereich der Wandung gelagerten Schieber (17), mit dem die Fluidkammer (12, 63) quer zur Richtung der Relativbewegung zumindest teilweise unterteilt werden kann, und mindestens einem Fluidkanal (31) im Schieber (17), **gekennzeichnet durch** mindestens eine radial innen liegende Druckkammer (18) und mindestens eine radial außen liegende Druckkammer (19), die im zweiten Kupplungsteil (1, 53) angeordnet und unabhängig voneinander mit Druck beaufschlagbar sind, sowie einen mit dem Schieber (17) verbundenen, zwischen den Druckkammern (18, 19) radial beweglichen Kolben (16), wobei der Fluidkanal (31) die Fluidkammer (12, 63) mit der radial innen liegenden Druckkammern (18) verbindet und bei Verschieben des Schiebers (17) in die Fluidkammer (12, 63) den Durchtritt von verdrängtem Fluid aus der Fluidkammer (12,63) in die radial innen liegende Druckkammer (18) ermöglicht.

2. Schalt-kupplung nach Anspruch 1, **dadurch gekennzeichnet dass** die der Wandung gegenüberliegende Seite des Hohlraums in Richtung der Relativbewegung derart wellig bzw. hyperbolisch-evolventenförmig ausgebildet ist, dass im Hohlraum mindestens zwei Fluidkammern (12, 63) ausgebildet sind.

3. Schalt-Kupplung nach Anspruch 1 oder 2, **dadurch gekennzeichet, dass** beide Kupplungsteile (1, 2; 53, 55) drehbar gelagert sind.

4. Schalt-Kupplung nach Anspruch 3, **gekennzeichnet durch** ein Kupplungs-Innenteil (1, 53) und ein Kupplungs-Außenteil (2, 55), die zwei konzentrisch um eine Drehachse gelagerte Bauteile miteinander verbinden.

5. Schalt-Kupplung nach Anspruch 4, **dadurch gekennzeichnet, dass** die Bauteile eine Welle (3, 51,52) und ein darauf sitzendes Zahnrad sind.

6. Schalt-Kupplung nach Anspruch 4 oder 5, **dadurch gekennzeichnet, dass** das Kupplungs-Innenteil (1, 53) scheibenförmig mit einer zur Drehachse der Scheibe konzentrischen Außenfläche als Wandung ausgebildet ist, die eine oder mehrere Fluidkammern (12, 63), die in einem durch das Kupplungs-Außenteil (2,55) gebildeten Hohlmantel vorgesehen sind, verschließt.

7. Schalt-Kupplung nach Anspruch 3, **dadurch gekennzeichnet, dass** die Kupplungsteile (1, 2; 53, 55) zwei miteinander fluchtende Wellen (3, 51, 52) verbinden.

8. Schalt-Kupplung nach Anspruch 7, **dadurch gekennzeichnet, dass** das erste Kupplungsteil (2,55) an einem Ende einer der beiden Wellen (51, 52) mit einem Hohlraum ausgebildet ist der in Richtung zur anderen Welle (3) hin offen ist und durch eine an dem anderen Ende der beiden Wellen (51, 52) ausgebildete, sich quer zu seiner Drehachse erstreckende Wandung verschlossen ist.

9. Schalt-Kupplung, nach einem der Ansprüche 1 bis 8, **gekennzeichnet durch** mindestens einen weiteren Fluidkanal, (32) im Schieber (17), der bei Verschieben des Schiebers (17) in die Fluidkammer (12, 63) den Durchtritt von verdrängtem Fluid in eine in Bewegungsrichtung des Schiebers (17) hinter dem Schieber (17) im zweiten Kupplungsteil (1, 53) frei werdende Ausgleichskammer (33) ermöglicht.

10. Schalt-Kupplung nach einem der Ansprüche 1 bis 9, **gekennzeichnet durch** Kanäle im zweiten Kupplungsteil (1, 53), über die mindestens eine Fluidkammer (12, 63) mit einer Fluidversorgungseinheit verbunden ist, mit der ein statischer Druck, der einem **durch** den Schieber (17) in der Fluidkammer (12, 63) erzeugten Druck überlagert ist, einstell-und/oder regelbar ist.

11. Schalt-Kupplung nach einem der Anspruche 1 bis 10, **gekennzeichnet durch** einen Schieber (17) mit einer in Richtung der Relativbewegung rechteckig ausgebildeten Stirnkante.

12. Schalt-Kupplung nach einem der Ansprüche 1 bis 10, **gekennzeichnet durch** einen Schieber (17) mit einer in Richtung der Relativbewegung, dreieckig ausgebildeten Stimkante.

13. Schalt-Kupplung nach einem der Ansprüche 1 bis 10, **gekennzeichnet durch** einen Schieber (17) mit einer in Richtung der Relativbewegung schräg ausgebildeten Stirnkante.

14. Schalt-Kupplung nach einem der Ansprüche 1 bis 10, **gekennzeichnet durch** einen Schieber (17) mit einer in Richtung der Relativbewegung konkav ausgebildeten Stirnkante.

15. Schalt-Kupplung nach einem der Ansprüche 1 bis 10, **gekennzeichnet durch** einen Schieber (17) mit einer in Richtung der Relativbewegung konvex ausgebildeten Stirnkante.

16. Schalt-Kupplung nach einem der Ansprüche 1 bis 15, **dadurch gekennzeichnet, dass** der Kolben (16) hydraulisch oder pneumatisch betätigt wird.

17. Schalt-Kupplung nach einem der Ansprüche 1 bis 16, **dadurch gekennzeichnet dass** der Schieber (17) entgegen einer Federkraft betätigt werden kann.

18. Schalt-Kupplung nach einem der Ansprüche 3 bis 17, **dadurch gekennzeichnet, dass** die Anzahl der Schieber (17) größer als die Anzahl der Fluidkammern (12, 63) ist.

19. Schalt-Kupplung nach einem der Ansprüche 1 bis 18, **dadurch gekennzeichnet, dass** das Fluid eine inkompressible Flüssigkeit ist.

20. Schalt-Kupplung nach Anspruch 19, **dadurch gekennzeichnet dass** das Fluid viskoelastisch ist.

21. Schalt-Kupplung nach einem der Ansprüche 1 bis 18, **dadurch gekennzeichnet dass** das Fluid ein Gel ist.

## Claims

1. Clutch for connecting a drive-input-side and a drive-output-side component, having at least one first and one second clutch part, having at least one cavity, which is open to at least one side and which forms at least one fluid chamber (12, 63), in the first clutch part (2, 55), which cavity is closed off by a wall on the second clutch part (1, 53), with the cavity and the wall being movable relative to one another, having at least one slide (17) which is mounted on the second clutch part (1, 53) in the region of the wall and by means of which the fluid chamber (12, 63) can be at least partially divided transversely with respect to the direction of the relative movement, and having at least one fluid duct (31) in the slide (17), **characterized by** at least one pressure chamber (18) situated radially at the inside and at least one pressure chamber (19) situated radially at the outside, which pressure chambers (18, 19) are arranged in the second clutch part (1, 53) and can be pressurized independently of one another, and by a piston (16) which is connected to the slide (17) and which is radially movable between the pressure chambers (18, 19), with the fluid duct (31) connecting the fluid chamber (12, 63) to the radially inner pressure chamber (18) and, in the event of a movement of the slide (17) into the fluid chamber (12, 63), permitting the passage of displaced fluid from the fluid chamber (12, 63) into the pressure chamber (18) situated radially at the inside.

2. Clutch according to Claim 1, **characterized in that that** side of the cavity which is situated opposite the wall is of corrugated or hyperbolic-involute design in the direction of the relative movement in such a way that at least two fluid chambers (12, 63) are formed in the cavity.

3. Clutch according to Claim 1 or 2, **characterized in that** both clutch parts (1, 2; 53, 55) are rotatably mounted.

4. Clutch according to Claim 3, **characterized by** a clutch inner part (1, 53) and a clutch outer part (2, 55) which connect two components, which are mounted concentrically about a rotational axis, to one another.

5. Clutch according to Claim 4, **characterized in that** the components are a shaft (3, 51, 52) and a gearwheel which is seated thereon.

6. Clutch according to Claim 4 or 5, **characterized in that** the clutch inner part (1, 53) is designed in the manner of a disc with an outer surface, which is concentric with respect to the rotational axis of the disc, as a wall which closes off one or more fluid chambers (12, 63) which are provided in a hollow casing which is formed by the clutch outer part (2, 55).

7. Clutch according to Claim 3, **characterized in that** the clutch parts (1, 2; 53, 55) connect two shafts (3, 51, 52) which are aligned with one another.

8. Clutch according to Claim 7, **characterized in that** the first clutch part (2, 55) is formed on one end of one of the two shafts (51, 52) with a cavity which is open in the direction of the other shaft (3) and which is closed off by a wall which is formed on the other end of the two shafts (51, 52) and which extends transversely with respect to the rotational axis of said cavity.

9. Clutch according to one of Claims 1 to 8, **characterized by** at least one further fluid duct (32) in the slide (17), which further fluid duct (32), during a movement of the slide (17) into the fluid chamber (12, 63), permits the passage of displaced fluid into a compensating chamber (33) which is opened up in the second clutch part (1, 53) behind the slide (17) in the movement direction of the slide (17).

10. Clutch according to one of Claims 1 to 9, **characterized by** ducts in the second clutch part (1, 53), by means of which ducts at least one fluid chamber (12, 63) is connected to a fluid supply unit by means of which a static pressure, which is superposed on a pressure generated in the fluid chamber (12, 63) by the slide (17), can be adjusted and/or regulated.

11. Clutch according to one of Claims 1 to 10, **characterized by** a slide (17) with a face edge which is of rectangular design in the direction of the relative movement.

12. Clutch according to one of Claims 1 to 10, **characterized by** a slide (17) with a face edge which is of triangular design in the direction of the relative movement.

13. Clutch according to one of Claims 1 to 10, **characterized by** a slide (17) with a face edge which is of oblique design in the direction of the relative movement.

14. Clutch according to one of Claims 1 to 10, **characterized by** a slide (17) with a face edge which is of concave design in the direction of the relative movement.

15. Clutch according to one of Claims 1 to 10, **characterized by** a slide (17) with a face edge which is of convex design in the direction of the relative movement.

16. Clutch according to one of Claims 1 to 15, **characterized in that** the piston (16) is hydraulically or pneumatically actuated.

17. Clutch according to one of Claims 1 to 16, **characterized in that** the slide (17) can be actuated counter to a spring force.

18. Clutch according to one of Claims 3 to 17, **characterized in that** the number of slides (17) is greater than the number of fluid chambers (12, 63).

19. Clutch according to one of Claims 1 to 18, **characterized in that** the fluid is an incompressible liquid.

20. Clutch according to Claim 19, **characterized in that** the fluid is viscoelastic.

21. Clutch according to one of Claims 1 to 18, **characterized in that** the fluid is a gel.

## Revendications

1. Embrayage pour relier un élément du côté menant et un élément du côté mené, avec au moins une première et une deuxième partie d'embrayage, avec au moins une cavité dans la première partie d'embrayage (2, 55), cavité qui est ouverte vers au moins un côté, qui forme au moins une chambre de fluide (12, 63) et qui est fermée par une paroi sur la deuxième partie d'embrayage (1, 53), sachant que la cavité et la paroi sont mobiles l'une par rapport à l'autre, avec au moins un coulisseau (17) monté sur la deuxième partie d'embrayage (1, 53) dans la région de la paroi, coulisseau par lequel la chambre de fluide (12, 63) peut être subdivisée au moins partiellement transversalement à la direction du mouvement relatif, et avec au moins un canal de fluide (31) dans le coulisseau (17), **caractérisé par** au moins une chambre de pression (18) située radialement à l'intérieur et au moins une chambre de pression (19) située radialement à l'extérieur, qui sont disposées dans la deuxième partie d'embrayage (1, 53) et qui peuvent être alimentées en pression indépendamment l'une de l'autre, ainsi que par un piston (16) relié au coulisseau (17) et mobile radialement entre les chambres de pression (18, 19), sachant que le canal de fluide (31) relie la chambre de fluide (12, 63) à la chambre de pression (18) située radialement à l'intérieur et, lors du déplacement du coulisseau (17) dans la chambre de fluide (12, 63), permet au fluide qui est refoulé hors de la chambre de fluide (12, 63) de passer dans la chambre de pression (18) située radialement à l'intérieur.

2. Embrayage selon la revendication 1, **caractérisé en ce que** le côté de la cavité qui est opposé à la paroi est réalisé, dans la direction du mouvement relatif, ondulé ou encore en forme de développante hyperbolique de telle sorte qu'au moins deux chambres de fluide (12, 63) sont formées dans la cavité.

3. Embrayage selon la revendication 1 ou 2, **caractérisé en ce que** les deux parties d'embrayage (1, 2 ; 53, 55) sont montées à rotation.

4. Embrayage selon la revendication 3, **caractérisé par** une partie intérieure d'embrayage (1, 53) et une partie extérieure d'embrayage (2, 55), qui relient entre eux deux éléments montés concentriquement autour d'un axe de rotation.

5. Embrayage selon la revendication 4, **caractérisé en ce que** les éléments sont un arbre (3, 51, 52) et une roue dentée montée sur cet arbre.

6. Embrayage selon la revendication 4 ou 5, **caractérisé en ce que** la partie intérieure d'embrayage (1, 53) est réalisée en forme de disque avec une surface extérieure concentrique à l'axe de rotation du disque comme paroi qui ferme une ou plusieurs chambres de fluide (12, 63) qui sont prévues dans une enveloppe creuse formée par la partie extérieure d'embrayage (2, 55).

7. Embrayage selon la revendication 3, **caractérisé en ce que** les parties d'embrayage (1,2; 53, 55) relient deux arbres (3, 51, 52) mutuellement alignés.

8. Embrayage selon la revendication 7, **caractérisé en ce que** la première partie d'embrayage (2, 55) est réalisée, à une extrémité d'un des deux arbres (51, 52), avec une cavité qui est ouverte en direction de l'autre arbre (3) et qui est fermée par une paroi s'étendant transversalement à son axe de rotation, formée à l'autre extrémité des deux arbres (51, 52).

9. Embrayage selon l'une des revendications 1 à 8, **caractérisé par** au moins un autre canal de fluide (32) dans le coulisseau (17), qui lors du déplacement du coulisseau (17) dans la chambre de fluide (12, 63), permet au fluide refoulé de passer dans une chambre de compensation (33) libérée dans la deuxième partie d'embrayage (1, 53) en arrière du coulisseau (17) dans la direction de déplacement du coulisseau (17).

10. Embrayage selon l'une des revendications 1 à 9, **caractérisé par** des canaux dans la deuxième partie d'embrayage (1, 53), par l'intermédiaire desquels au moins une chambre de fluide (12, 63) est reliée à une unité d'alimentation en fluide qui permet de régler et/ou de réguler une pression statique qui est superposée à une pression produite par le coulisseau (17) dans la chambre de fluide (12, 63).

11. Embrayage selon l'une des revendications 1 à 10, **caractérisé par** un coulisseau (17) avec un bord frontal réalisé rectangulaire dans la direction du mouvement relatif.

12. Embrayage selon l'une des revendications 1 à 10, **caractérisé par** un coulisseau (17) avec un bord frontal réalisé triangulaire dans la direction du mouvement relatif.

13. Embrayage selon l'une des revendications 1 à 10, **caractérisé par** un coulisseau (17) avec un bord frontal réalisé oblique dans la direction du mouvement relatif.

14. Embrayage selon l'une des revendications 1 à 10, **caractérisé par** un coulisseau (17) avec un bord frontal réalisé concave dans la direction du mouvement relatif.

15. Embrayage selon l'une des revendications 1 à 10, **caractérisé par** un coulisseau (17) avec un bord frontal réalisé convexe dans la direction du mouvement relatif.

16. Embrayage selon l'une des revendications 1 à 15, **caractérisé en ce que** le piston (16) est actionné hydrauliquement ou pneumatiquement.

17. Embrayage selon l'une des revendications 1 à 16, **caractérisé en ce que** le coulisseau (17) peut être actionné à l'encontre d'une force de ressort.

18. Embrayage selon l'une des revendications 3 à 17, **caractérisé en ce que** le nombre de coulisseaux (17) est supérieur au nombre de chambres de fluide (12, 63).

19. Embrayage selon l'une des revendications 1 à 18, **caractérisé en ce que** le fluide est un liquide incompressible.

20. Embrayage selon la revendication 19, **caractérisé en ce que** le fluide est viscoélastique.

21. Embrayage selon l'une des revendications 1 à 18, **caractérisé en ce que** le fluide est un gel.
